# EUROPÄISCHE PATENTSCHRIFT

(11) **EP 1 223 004 B1**
(45) Veröffentlichungstag und Bekanntmachung des Hinweises auf die Patenterteilung: **24.03.2004**
(21) Anmeldenummer: 01129053.3
(22) Anmeldetag: 07.12.2001
(51) Int. Cl.: B23Q 11/00, B23Q 17/00

(54) **Werkzeugmaschine mit verschwenkbarem Kommandopult**
Machine tool with control board
Machine-outil avec pupitre de commande

(30) Priorität: 10.01.2001 DE 10101675
(43) Veröffentlichungstag der Anmeldung: 17.07.2002
(73) Patentinhaber: CHIRON-WERKE GMBH & CO. KG, 78532 Tuttlingen (DE)
(72) Erfinder: Schweizer, Anton, 78573 Wurmlingen (DE)
(74) Vertreter: Otten, Hajo, Dr.-Ing.

(56) Entgegenhaltungen:
- EP-A- 0 502 203
- EP-A- 0 509 104
- DE-A- 3 723 834
- DE-A- 19 725 630
- DE-C- 3 730 984
- JP-A- 6 008 172
- JP-A- 9 267 230
- US-A- 5 669 867

## Beschreibung

Die Erfindung betrifft eine Werkzeugmaschine mit einem Arbeitsraum, einem den Arbeitsraum umschließenden Gehäuse, einem Kommandopult, das der Steuerung der Werkzeugmaschine dient, und mit einem von außen an einer Wand des Gehäuses befestigten Gelenk, über das das Kommandopult um eine vertikale Achse verschwenkbar mit dem Gehäuse verbunden ist.

Eine derartige Werkzeugmaschine ist aus der DE 37 30 9:84 C1 bekannt.

Größere Werkzeugmaschinen weisen häufig ein Gehäuse mit einem davon umschlossenen Arbeitsraum auf, in dem die Bearbeitung von Werkstücken mit Hilfe von Werkzeugen erfolgt. Das Gehäuse schützt die Umgebung vor umherfliegenden Spänen und Kühlschmiermittelspritzern und verringert die während der Bearbeitung außerhalb des Gehäuses auftretenden Schallpegel. Um auf den Arbeitsraum zugreifen zu können, z.B. bei einem Werkstückwechsel oder bei Wartungsarbeiten, sind derartige Gehäuse mit einer oder mehreren Türen versehen. Ferner weisen derartige Gehäuse häufig eine oder mehrere Scheiben auf, durch die von außen in den Arbeitsraum eingesehen werden kann.

Zur Programmierung, Werkzeugverwaltung oder anderen im Zusammenhang mit der Steuerung der Werkzeugmaschine stehenden Tätigkeiten ist in der Regel ein Kommandopult vorgesehen, das an der Außenseite des Gehäuses befestigt ist. Das Kommandopult ist dabei meist so angeordnet, daß eine Bedienperson während der Betätigung des Kommandopultes gleichzeitig durch eine der Scheiben in den Arbeitsraum einsehen kann, um die Umsetzung der eingegebenen Befehle zu überwachen. Gelegentlich ist es jedoch erforderlich, bei derartigen Tätigkeiten von verschiedenen Seiten des Gehäuses her durch hierzu vorgesehene Scheiben in den Arbeitsraum einzusehen. Um dies zu ermöglichen, kann an der betreffenden Wand des Gehäuses ein weiteres Kommandopult mit gegebenenfalls eingeschränkten Bedienmöglichkeiten vorgesehen sein, wodurch zwei unterschiedliche Bedienpositionen geschaffen werden.

Bei der aus der eingangs genannten DE 37 30 984 C1 bekannten Werkzeugmaschine ist das Bedienpult im Bereich einer vertikalen Seitenkante ("Ecke") des Gehäuses schwenkbar befestigt. Das Bedienpult ist dabei auf einen Tragarm um eine vertikale Achse drehbar aufgesetzt, wobei der Tragarm selbst im Bereich der betreffenden Seitenkante des Gehäuses über ein herkömmliches Drehgelenk an dem Gehäuse angelenkt ist. Diese Art der Aufhängung ermöglicht es, das Kommandopult durch Verschwenken des Tragarmes und zusätzliches Verdrehen auf dem Tragarm beliebig zwischen zwei "äußeren" Bedienpositionen hin- und herzuführen. Die Geometrie des Tragarmes mit dem drehbar darauf befestigten Kommandopult sowie die Anordnung der transparenten Scheiben in dem Gehäuse ist dabei so gewählt, daß von verschiedenen Bedienpositionen aus das. Kommandopult betätigt und gleichzeitig in den Arbeitsraum eingesehen werden kann.

Nachteilig bei der bekannten Werkzeugmaschine ist jedoch, daß der Tragarm mit dem darauf befestigten Kommandopult eine vergleichsweise weit ausgreifende Schwenkbewegung ausführt. Auch in den beiden äußeren Bedienpositionen ist das Kommandopult relativ weit von dem Gehäuse der Werkzeugmaschine entfernt, so daß das Kommandopult nur durch ein zusätzliches Verdrehen gegenüber dem Tragarm bequem bedient werden kann. Zudem entstehen durch den weit nach außen reichenden Tragarm große Hebelkräfte, die eine entsprechend stabile Ausführung des Gelenks und des Tragarms selbst erforderlich machen. Die gesamte Konstruktion wird dadurch relativ aufwendig und damit teuer. Außerdem hat der weit ausladende Tragarm den weiteren Nachteil, daß die gesamte Werkzeugmaschine einen relativ großen Platzbedarf hat und es dadurch auch leichter zu Zusammenstößen zwischen, dem Kommandopult oder dem Tragarm einerseits und Fahrzeugen oder Personen andererseits kommen kann.

Die US-A-5669867 zeigt eine Werkzeugmaschine, bei der ein L-förmiger Arm das Kommandopult trägt. Inwieweit der Arm oder das Kommandopult an dem Arm verschwenkbar sind, ist aus dieser Entgegenhaltung nicht zu entnehmen.

Die EP 0 502 203 A1 beschreibt eine Spritzgußmaschine, bei der ein Kommandopult über einen abgewinkelten Arm an einer sich vertikal erstreckenden Säule gelagert ist. Der horizontal verlaufende, in der horizontalen Ebene abgewinkelte Arm wird zusätzlich über eine Kugelrolle gestützt, die auf einem Gehäuseteil der Spritzgussmaschine läuft. Beim Verschwenken des Armes kann das Kommandopult verschiedene Positionen einnehmen, wobei eine Position durch einen Anschlag begrenzt ist.

Es ist daher Aufgabe der Erfindung, eine Werkzeugmaschine der eingangs genannten Art derart zu verbessern, daß die Verschwenkbarkeit zwischen den Bedienpositionen auf konstruktiv insgesamt einfachere und daher kostengünstigere Weise ermöglicht wird.

Erfindungsgemäß wird diese Aufgabe bei der eingangs erwähnten werkzeugmaschine dadurch gelöst, daß das Kommandopult starr mit dem Gelenk verbunden und zwischen zwei Bedienpositionen verschwenkbar ist, von denen wenigstens eine selbstarretierend ist, und die wenigstens eine selbstarretierende Bedienposition durch das Gelenk festgelegt ist.

Der Erfinder hat nämlich erkannt, daß sich zwei unterschiedliche Bedienpositionen in viel einfacherer Weise ermöglichen lassen, wenn auf die Drehbarkeit des Kommandopultes auf dem Tragarm verzichtet wird und statt dessen das Kommandopult unmittelbar oder über eine kleine Tragkonstruktion mit einem oder mehreren Gelenken starr verbunden wird. Die bislang übliche kombinierte Schwenk- und Drehbewegung, die beim Übergang von einer Bedienposition in die andere erforderlich war, wird erfindungsgemäß ersetzt durch eine einfache Klappbewegung, wie sie z.B. von. Türen oder Fenstern her bekannt ist, die unter Verwendung von Scharnieren angeschlagen sind. Diese einfache Klappbewegung läßt sich aber konstruktiv mit wesentlich einfacheren Mitteln realisieren, als dies bei einer kombinierte Schwenk- und Drehbewegung der Fall ist. So entf ällt zum einen das Drehgelenk zwischen dem Tragarm und dem Kommandopult, welches zu diesem Zweck noch einer besonderen Aufhängung oder eines Tragrahmens bedarf. Zum anderen kann der Tragarm selbst ganz oder teilweise entfallen, da die vertikale Achse, um die die Schwenkwegung ausgeführt wird, durch das Kommandopult hindurch oder in dessen unmittelbarer Nähe verlaufen kann.

Der Wegfall des zusätzlichen Drehgelenks ermöglicht es zudem, bereits vorhandene weder dreh- noch verschwenkbar an einem Gehäuse befestigte Kommandopulte durch relativ geringfügige bauliche Maßnahmen zu verschwenkbaren Kommandopulten umzurüsten.

von Vorteil ist dabei ferner, daß das Kommandopult zwischen zwei Bedienpositionen verschwenkbar, von denen wenigstens eine selbstarretierend ist.

Diese Maßnahme, die bei einer gattungsgemäßen Werkzeugmaschine auch unabhängig von einer starren Verbindung des Kommandopultes mit dem Gelenk ergriffen werden kann und für sich genommen erfinderisch ist, stellt sicher, daß das Kommandopult nicht über die wenigstens eine Bedienposition hinaus verschwenkt werden kann. In der Regel wird es zweckmäßig sein, beide Bedienpositionen in dieser Weise zu sichern, weswegen im folgenden stets auf beide Bedienpositionen Bezug genommen wird. Eine solche Selbstarretierung ist insbesondere unter Sicherheitsgesichtspunkten vorteilhaft, da bei entsprechender Festlegung der Bedienpositionen sichergestellt ist, daß das Kommandopult zu keiner Zeit soweit in die Nähe des Gehäuses gelangen kann, daß Finger oder andere Körperteile von Bedienpersonen eingeklemmt werden können. Darüber hinaus verhindert die Selbstarretierung, daß das Kommandopult bei Einnahme einer Bedienposition in gefährlicher Weise zurückschwingt, wie dies bei einem Anschlag an Gummistoppern oder ähnlichen Einrichtungen möglich ist. Da außerdem bei einem derartigen Zurückschwingen die auftretenden Kräfte annähernd doppelt so groß sind, wie dies bei einer Arretierung in den Bedienpositionen der Fall ist, kann das Gelenk insgesamt leichter und damit kostengünstiger ausgeführt werden.

Selbstverständlich ist es möglich, zwischen den beiden "äußeren" Bedienpositionen noch eine oder mehrere weitere Positionen festzulegen, an denen eine Selbstarretierung eintreten soll.

Die Selbstarretierung kann beispielsweise mit Hilfe von Rasthaken realisiert werden, die an entsprechenden Stellen des Kommandopultes befestigt werden und mit Gegenstücken korrespondieren, die an dem Gehäuse befestigt sind. Beim Einnehmen einer Bedienposition greift dann der Rasthaken in das entsprechende Gegenstück ein und verrastet dort. Die Verrastung kann erst durch Betätigung durch eine Bedienperson aufgehoben werden.

Es kann auf zusätzlich an dem Kommandopult und dem Gehäuse angebrachte Einrichtungen wie Rasthaken o.ä. verzichtet werden. Statt dessen erfolgt die Selbstarretierung in den Bedienpositionen allein mit Hilfe des Gelenks. Eine Möglichkeit hierzu besteht beispielsweise darin, daß an zwei zueinander beweglichen Teilen des Gelenks Reibungsflächen vorgesehen sind, die nur bei bestimmten Relativpositionen der beiden Gelenkteile ineinander greifen und eine nur mit zusätzlichem Kraftaufwand lösbare Arretierung bewirken.

Ferner hat der Erfinder erkannt, daß ein langer Tragarm nicht nur eine Verdrehbarkeit des Kommandopultes auf dem Tragarm, sondern umgekehrt auch die Verdrehbarkeit einen langen Tragarm erfordert. Bei drehbar auf dem Tragarm gelagerten Kommandopulten ist nämlich sicherzustellen, daß das Kommandopult in jeder Verschwenkposition auf dem Tragarm verdreht werden kann, ohne daß das Kommandopult dabei zu nahe an das Gehäuse der Werkzeugmaschine herankommt. Ein zu geringer Abstand könnte dabei dazu führen, daß eine Bedienperson, die an dem Bedienpult angreift und dieses gleichzeitig drehen und auch verschwenken möchte, mit ihrer Hand oder ihrem Arm zwischen dem Gehäuse und dem Bedienpult eingeklemmt wird. Bei einer starren Befestigung des Bedienpultes an dem Gelenk ist eine derartige kombinierte und für eine Bedienperson in ihrer Geometrie nicht leicht zu überblickende Schwenk- und Drehbewegung ausgeschlossen. Wenn das Kommandopult ähnlich wie eine Türe an der Seitenkante oder einer Wand des Gehäuses angeschlagen wird, so entstehen im Bereich des Gelenks keine Spalte, die zu einer Gefährdung von Bedienpersonen durch Einklemmen führen können.

Bei einer bevorzugten Ausgestaltung der Erfindung ist das Gelenk auf der Höhe des Kommandopultes angeordnet.

Dies hat den Vorteil, daß das Kommandopult auf kürzestem Wege, nämlich in gleicher Höhe, mit dem Gelenk starr verbunden werden kann. Ausladende, sich nach unten, nach oben oder zur Seite hin erstreckende Tragarmkonstruktionen werden dadurch vermieden.

Weiter ist es bevorzugt, wenn die vertikale Achse im wesentlichen mit einer Seitenkante des Gehäuses zusammenfällt.

Dies hat den Vorteil, daß das Kommandopult um die entsprechende Seitenkante des Gehäuses um bis zu circa 180° herumgeschwenkt werden kann. Das Kommandopult läßt sich auf diese Weise von den beiden Wänden des Gehäuses her bedienen, die die betreffende Seitenkante des Gehäuses bilden.

Außerdem ist es bevorzugt, wenn die vertikale Achse im wesentlichen mit einer Seitenkante einer von Bedienelementen freien Rückseite des Kommandopultes zusammenfällt.

Auf diese Weise ist das Kommandopult unmittelbar, d.h. ohne eine dazwischenliegende Tragkonstruktion, starr mit dem Gelenk verbunden. Dies führt zu einem minimalen Raumbedarf der Schwenkbewegung, da der maximale Radius bei der Schwenkbewegung durch die Abmaße des Kommandopultes festgelegt ist. Ferner kann bei einer solchen Anordnung kein nennenswerter Spalt zwischen dem Gehäuse und dem Kommandopult entstehen, der möglicherweise eine Gefahrenquelle für Bedienpersonen darstellt.

Alternativ zu einer unmittelbaren Befestigung des Kommandopultes an dem Gelenk kann das Kommandopult auch über einen Träger mit dem Gelenk verbunden sein.

Durch einen solchen zusätzlichen Träger kann die räumliche Lage, die das Kommandopult in einer der beiden Bedienpositionen einnimmt, gezielt an ergonomische Erfordernisse und die Anordnung der Fenster in den Wänden des Gehäuses angepaßt werden.

Dabei ist es bevorzugt, wenn der Träger an einer von Bedienelementen freien Rückseite des Kommandopultes starr befestigt ist.

Eine Befestigung des Trägers an der Rückseite des Kommandopultes ist insofern vorteilhaft, als dadurch keine von der Seite oder von oben oder unten an den Kommandopult angreifenden Tragkonstruktionen erforderlich sind, die zusätzlichen Raum beanspruchen und die Gefahr von Kollisionen mit der Bedienperson bergen.

Besonders bevorzugt ist es, wenn in der wenigstens einen selbstarretierenden Bedienposition das Kommandopult gegenüber Zwischenpositionen abgesenkt ist.

Dies hat den Vorteil, daß das Eigengewicht des Kommandopultes und damit ggf. verbundener Teile zur Selbstarretierung ausgenützt wird. Nachdem das Kommandopult nämlich in eine solche Bedienposition überführt wurde und sich dabei abgesenkt hat, kann es nur durch zusätzlichen Kraftaufwand, der für das Anheben aus dem abgesenkten Zustand erforderlich ist, wieder aus der Bedienposition entfernt werden. Eine derartiges Absenken läßt sich z.B. mit Hilfe eines Gelenks mit zwei Gelenkkörpern erreichen, deren einander gegenüberliegende Flächen jeweils eine Verzahnung aufweisen, deren gegenseitiger Eingriff eine Absenkung zur Folge hat.

Eine bevorzugte Weiterbildung dieser Ausgestaltung zeichnet sich dadurch aus, daß das Gelenk zwei übereinander angeordnete und um die Achse zueinander verdrehbare Gelenkkörper aufweist, wobei an einem Gelenkkörper ein Führungskörper ausgebildet ist und an dem anderen Gelenkkörper eine Führungsfläche festlegt ist, wobei die Führungsfläche wenigstens eine Ausnehmung zur Aufnahme des Führungskörpers aufweist, die die wenigstens eine selbstarretierende Bedienposition festgelegt.

Durch diese Maßnahme wird auf konstruktiv besonders einfache Weise erreicht, daß das Kommandopult in einer solchen Bedienposition abgesenkt und damit arretiert wird. Bei dem Führungskörper handelt es sich vorzugsweise um einen Bolzen, der in dem einen Gelenkkörper verliersicher gehalten ist. Der Bolzen kann dabei entweder drehfest oder aber drehbar in dem einen Gelenkkörper befestigt sein, wobei eine drehbare Befestigung zwar einen höheren konstruktiven Aufwand erfordert, jedoch zu geringeren Reibungsverlusten als eine gleitende Führung des Bolzens auf der Führungsfläche führt. Der Führungskörper kann dabei entweder an dem unteren Gelenkkörper oder aber an dem oberen Gelenkkörper ausgebildet sein. Dementsprechend kann auch die Ausnehmung in dem oberen bzw. dem unteren Gelenkkörper vorgesehen sein. Außerdem ist es möglich, mehrere Führungskörper und Ausnehmungen vorzusehen, wobei auch der Fall denkbar ist, daß ein Führungskörper an dem unteren und ein Führungskörper an dem oberen Gelenkteil ausgebildet ist.

Die Ausnehmung kann dabei so geformt sein, daß die Arretierung nur dadurch wieder aufgehoben werden kann, daß das Kommandopult über eine kurze Strecke hinweg nach oben angehoben wird.

Besonders bevorzugt ist es jedoch, wenn die wenigstens eine Ausnehmung eine vorzugsweise als schiefe Ebene ausgebildete Flanke aufweist, über die der Führungskörper bei der Einnahme der wenigstens einen selbstarretierenden Bedienposition geführt wird.

Auf diese Weise wird zum einen verhindert, daß das Kommandopult bei der Einnahme einer solchen Bedienposition in einer ruckartigen Bewegung abgesenkt wird. Zum anderen kann die Arretierung leichter wieder aufgehoben werden, indem nämlich das Kommandopult verdreht und dadurch der Führungskörper die Flanke hinaufgeführt wird. Dabei nimmt der Abstand zwischen den beiden Gelenkkörpern zu, wodurch das Kommandopult mit den ggf. daran befestigten Teilen entgegen seiner Gewichtskraft angehoben wird. Das Lösen der Arretierung erfolgt somit ebenfalls durch ein Verschwenken, jedoch mit erhöhtem Krafteinsatz. Dies wird von einer Bedienperson in der Regel als angenehmer empfunden, als wenn das Kommandopult zum Lösen der Arretierung angehoben werden muß.

Bei einer weiteren bevorzugten Weiterbildung ist die wenigstens eine Ausnehmung in ihrer Form an den Führungskörper angepaßt, so daß in der wenigstens einen selbstarretierenden Bedienposition der Führungskörper flächig in der wenigstens einen Ausnehmung aufgenommen ist.

Dies hat den Vorteil, daß beim Absenken des Kommandopultes auftretende Kräfte über eine größere Fläche verteilt werden. Dies verringert einen Verschleiß an dem Führungskörper und der Ausnehmung.

Dabei ist es weiter bevorzugt, wenn der Führungskörper als Bolzen ausgebildet ist und die wenigstens eine Ausnehmung einen an die Umfangskontur des Bolzens angepaßten gekrümmten Abschnitt aufweist, so daß der Bolzen in der wenigstens einen Ausnehmung geringfügig schwingen kann.

Auf diese Weise wird eine Dämpfungswirkung erreicht, wenn das Kommandopult eine Bedienposition einnimmt. Aufgrund der Schwingbewegung des Bolzens und der damit verbundenen Teile wird nämlich das Kommandopult kurz angehoben, so daß ein Teil der kinetischen Energie, die das Kommandopult beim Absenken erlangt hat, wieder in eine entsprechende Gegenbewegung umgesetzt wird. Durch diese Dämpfungswirkung wird die Belastung der Gelenkkörper und des Führungskörpers bei Erreichen einer selbstarretierenden Bedienposition verringert, was zu einer längeren Lebensdauer und zu niedrigeren Kosten führt.

Bei einer weiteren bevorzugten Ausgestaltung der Erfindung ist das Kommandopult mit der Werkzeugmaschine über einen Kabelstrang verbunden, der aus dem Kommandopult an dessen oberen Ende austritt und in das Gehäuse in einer Höhe unterhalb des Kommandopultes eintritt.

Eine derartige Anordnung des Kabelstrangs ermöglicht eine insgesamt relativ große Kabellänge, wodurch Beschädigungen des Kabelstrangs aufgrund zu starker Verdrillung vorgebeugt wird. Dadurch ist es nicht erforderlich, das Kabel relativ weit nach unten herabhängen zu lassen, wo es unter Umständen die Bewegungsfreiheit einer Bedienperson beeinträchtigen kann.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Merkmale der Erfindung ergeben sich aus der Beschreibung der nachfolgenden Ausführungsbeispiele anhand der Zeichnung. Darin zeigen:
- Fig. 1: eine perspektivische Darstellung einer neuen Werkzeugmaschine, bei der ein Kommandopult um eine vertikale Seitenkante des Gehäuses herum geschwenkt werden kann;
- Fig. 2: einen vergrößerten Ausschnitt aus Fig. 1, in dem Einzelheiten der Anlenkung des Kommandopultes an dem Gehäuse erkennbar sind;
- Fig. 3: einen Ausschnitt aus der Werkzeugmaschine nach Fig. 1 in einem horizontalen Schnitt, in dem unterschiedliche Bedienpositionen dargestellt sind;
- Fig. 4: in einer Darstellung wie Fig. 3 ein weiteres Ausführungsbeispiel der neuen Werkzeugmaschine, bei der ein Kommandopult an einer Wand des Gehäuses der Werkzeugmaschine verschwenkbar befestigt ist;
- Fig. 5: eine perspektivische Darstellung eines Gelenks, über das das Kommandopult an dem Gehäuse angelenkt ist;
- Fig. 6: eine Seitenansicht des Gelenks aus Fig. 5 in einer Arretierungsstellung;
- Fig. 7: eine Seitenansicht des Gelenks aus Fig. 5 in einer Verschwenkstellung; und
- Fig. 8: einen Ausschnitt aus dem Gelenk nach Fig. 5 in eine vereinfachten Seitenansicht.

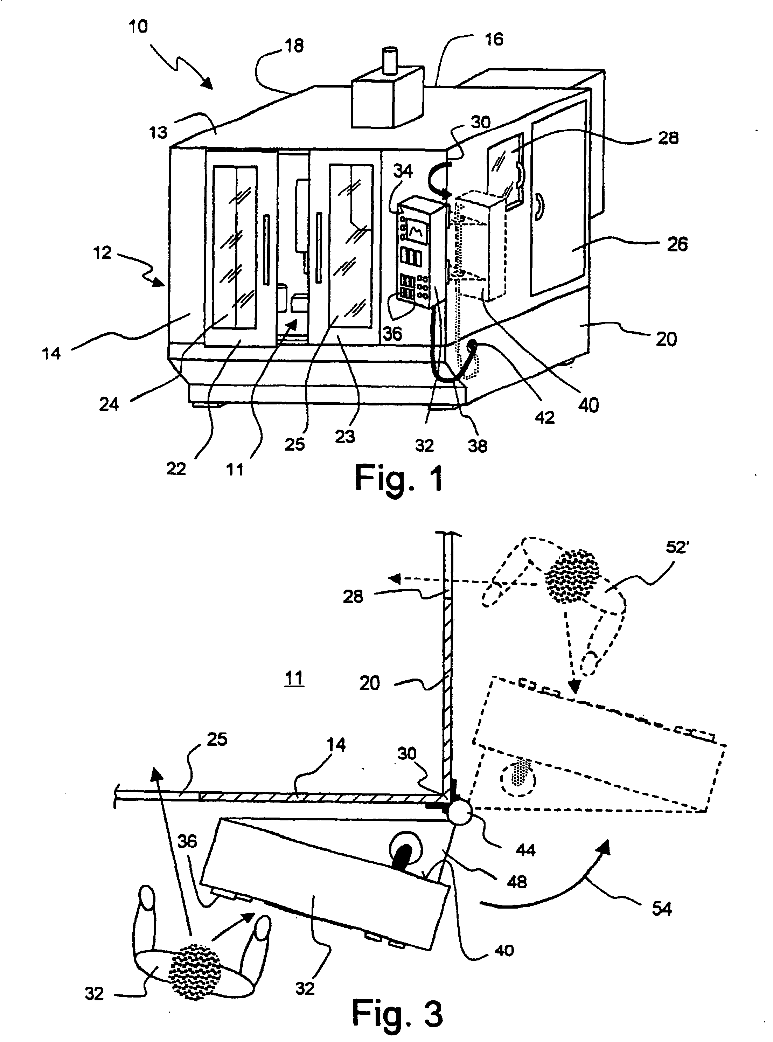

In Fig. 1 ist eine erfindungsgemäße Werkzeugmaschine perspektivisch dargestellt und insgesamt mit 10 bezeichnet. Die Werkzeugmaschine 10 weist einen Arbeitsraum 11 auf, in dem verschiedene für eine Bearbeitung von Werkstücken erforderliche Vorrichtungen, z.B. ein in drei Raumrichtungen verfahrbarer Bohrkopf, ein Werkzeugmagazin und ein Werkstückhalter, angeordnet sind. Der Arbeitsraum 11 wird von einem Gehäuse 12 umschlossen, welches eine Decke 13, eine Vorderwand 14, eine Rückwand 16 sowie eine linke und eine rechte Seitenwand 18 bzw. 20 aufweist. An der Vorderwand 14 sind zwei Schiebetüren 22 und 23 angebracht, durch die hindurch bearbeitete gegen unbearbeitete Werkstücke ausgewechselt werden können. Durch einen Spalt, der von der leicht geöffneten Schiebetüre 22 freigegeben ist, sind Teile der in dem Arbeitsraum 11 angeordneten Vorrichtungen erkennbar. In die Schiebetüren 22 und 23 sind Glasscheiben 24 bzw. 25 eingelassen, so daß in den Arbeitsraum 11 auch dann von außen eingesehen werden kann, wenn die beiden Schiebetüren 22 und 23 geschlossen sind.

Die rechte Seitenwand 20 weist eine seitlich angeschlagene Tür 26 auf, die Wartungsarbeiten ermöglicht. Ferner ist auf der rechten Seitenwand 20 ein Schiebefenster 28 angeordnet, durch das ebenfalls während der Bearbeitung von Werkstücken in den Arbeitsraum 11 eingesehen werden kann.

An einer Seitenkante 30 des Gehäuses 12, an der die Vorderwand 14 an die rechte Seitenwand 20 angrenzt, ist ein Kommandopult 32 schwenkbar befestigt. Das Kommandopult 32 weist auf seiner Vorderseite 34 mehrere Bedienelemente 36 auf und dient der Steuerung der Werkzeugmaschine 10. Mit Hilfe des Kommandopultes 32 läßt sich die Werkzeugmaschine 10 beispielsweise schrittweise programmieren; ferner kann dadurch gezielt in bereits programmierte Bearbeitungsabfolgen eingegriffen werden, z.B. wenn eine Bedienperson bei einem Blick in den Arbeitsraum 11 festgestellt, daß ein bestimmter Bearbeitungsschritt nicht wie vorgesehen durchgeführt wurde.

Die elektrische Verbindung zwischen dem Kommandopult 32 und den im Inneren des Gehäuses 12 liegenden Teilen der Werkzeugmaschine erfolgt über einen Kabelstrang, der von einem Schutzschlauch 38 umschlossen ist. Der Schutzschlauch 38 mit dem darinliegenden Kabelstrang tritt dabei an dem oberen Ende des Kommandopultes 32 aus dessen von Bedienelementen freien Rückseite 40 aus und ist durch eine Öffnung 42, die unterhalb des Kommandopultes 32 in der rechten Seitenwand 20 vorgesehen ist, durch das Gehäuse 12 in das Innere der Werkzeugmaschine 10 geführt. Der Schutzschlauch 38 ist aufgrund dieser Anordnung relativ lang, ohne aber dabei den Boden zu berühren oder bei einem Verschwenken des Kommandopultes 32 im Wege zu sein. Aufgrund seiner Länge wird der von dem Schutzschlauch 38 umschlossene Kabelstrang bei einem Verschwenken des Kommandopultes 32 nur geringfügig verdrillt, was die Verwendung eines leichteren Kabelstranges bei gleichzeitig hoher Lebensdauer erlaubt.

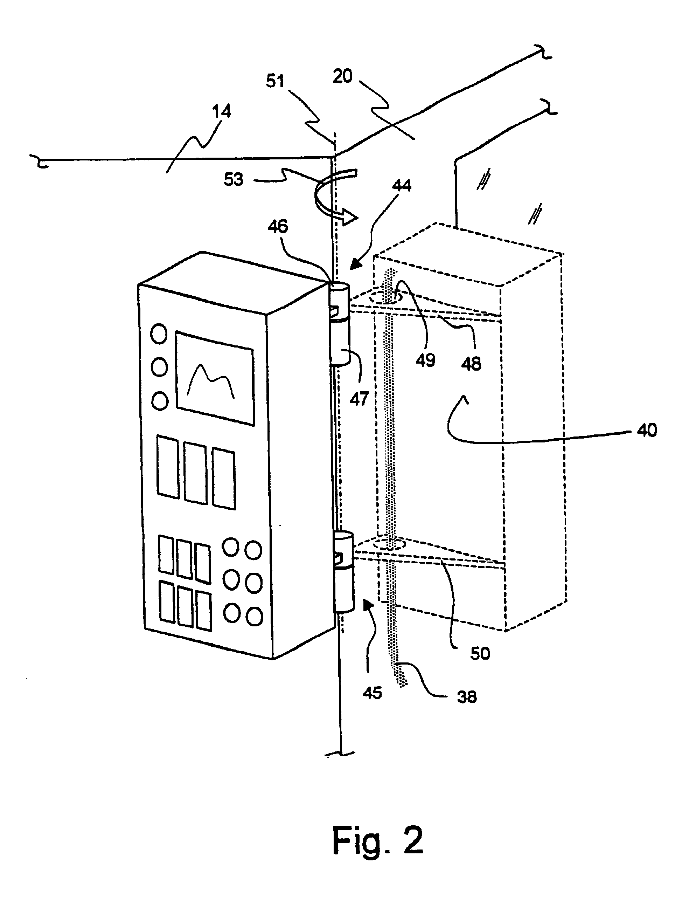

Fig. 2 zeigt einen Ausschnitt aus Fig. 1, in dem das Kommandopult 32 und dessen Anlenkung an dem Gehäuse 12 vergrößert dargestellt sind. In Fig. 2 ist erkennbar, daß das Kommandopult 32 über ein oberes Schwenkgelenk 44 und ein unteres Schwenkgelenk 45 an der Seitenkante 30 befestigt ist, die von der Vorderwand 14 und der rechten Seitenwand 20 des Gehäuses 12 gebildet wird. Das obere Schwenkgelenk 44 ist wie ein Scharnier aufgebaut und weist einen oberen Gelenkkörper 46 auf, der konzentrisch zu einem unteren Gelenkkörper 47 angeordnet und diesem gegenüber verdrehbar ist. Der untere Gelenkkörper 47 ist dabei in nicht näher dargestellter Weise an der Vorderwand 14 und der rechten Seitenwand 20 starr befestigt. Über einen oberen Träger 48 ist der obere Gelenkkörper 46 mit der Rückseite 40 des Kommandopultes 32 starr verbunden. Der obere Träger 48 ist als dreieckige Konsole ausgeführt, die mit einer Öffnung 49 versehen ist. Durch diese Öffnung 49 ist der Schutzschlauch 38 geführt, der am oberen Ende der Rückseite 40 aus dem Kommandopult 32 austritt. Das untere Schwenkgelenk 45 sowie ein starr damit verbundener unterer Träger 50 sind identisch wie das obere Schwenkgelenk 44 und der obere Träger 48 ausgebildet.

An den beiden Trägern 48 und 50 können außerdem zusätzliche, in den Fig. 1 und 2 aus Gründen der Übersicht nicht dargestellte Verkleidungselemente befestigt sein, die an den von der Rückseite 40 hervorstehenden Seitenkanten der Träger 48 und 50 anliegen. Auf diese Weise entsteht hinter der Rückseite 40 des Kommandopultes 32 ein Schacht, durch den der Schutzschlauch 38 vor Beschädigungen geschützt hindurchgeführt ist.

Die scharnierartigen Gelenke 44 und 45 ermöglichen eine Verschwenkbarkeit des Kommandopultes 32 um eine Schwenkachse 51 in der durch einen Pfeil 53 angedeuteten Richtung. Um das Kommandopult 32 von der in Fig. 2 mit durchgezogenen Linien dargestellten ersten Bedienposition in eine zweite gestrichtelt dargestellte Bedienposition zu überführen, braucht das Kommandopult 32 lediglich von Hand so weit verschwenkt zu werden, bis die in Fig. 2 gestrichelt angedeutete zweite Bedienposition erreicht ist. Die beiden Gelenke 44 und 45 sind dabei in weiter unten näher erläuterter Weise derart ausgebildet, daß das Kommandopult in jeder der beiden gezeigten Bedienpositionen selbstätig arretiert. Bei der Festlegung der Bedienpositionen wird dabei berücksichtigt, daß zwischen dem Kommandopult 32 und der jeweils nächstgelegenen Wand des Gehäuses 12 ein ausreichender Abstand verbleibt. Dieser Abstand ist so bemessen, daß es auch bei einer heftigeren Schwenkbewegung nicht zu Beschädigungen an dem Kommandopult 32 infolge eines Aufpralls auf der betreffenden Wand oder sogar zu Verletzungen von Fingern oder anderen Körperteilen kommen kann, die möglicherweise zwischen die betreffende Wand und das Kommandopult 32 geraten.

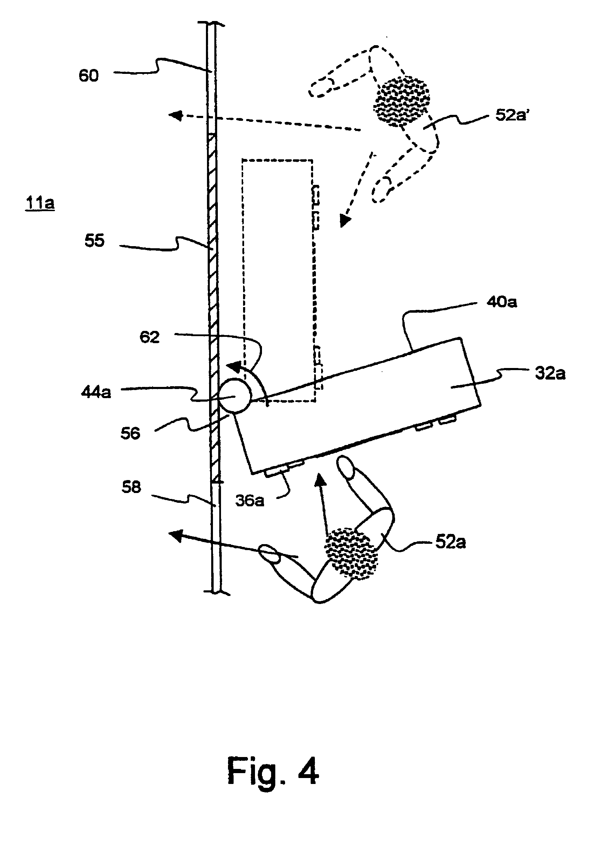

In Fig. 3 sind die beiden möglichen Bedienpositionen nochmals anhand eines horizontalen Schnittes im Bereich der Seitenkante 30 gezeigt. In der ersten, mit durchgezogenen Linien dargestellten Bedienposition hat eine Bedienperson 52 Zugriff auf die Bedienelemente 36 des Kommandpultes 32 und kann gleichzeitig durch die Glasscheiben 24 und 25 in den Arbeitsraum 11 einsehen. Durch ein Verschwenken des Kommandopultes 32 um annähernd 180° in Richtung des Pfeiles 54 geht dieses in die gestrichelt dargestellte zweite Bedienposition über. In dieser zweiten Bedienposition kann eine Bedienperson 52', die vor der rechten Seitenwand 20 steht, auf die Bedienelemente 36 des Kommandopultes 32 zugreifen und gleichzeitig durch das Schiebefenster 28 in den Arbeitsraum einsehen.

Insbesondere aus der Fig. 3 wird deutlich, daß die starre Befestigung des Kommandpultes 32 mit den Gelenken 44 und 45 eine Schwenkbewegung ermöglicht, die nur einen minimalen Raum für sich beansprucht. Dennoch werden zwei ergonomisch sehr günstige Bedienpositionen geschaffen, ohne daß hierzu das Kommandpult 32 zusätzlich um eine vertikale Körperachse drehbar angeordnet ist.

Durch die Geometrie der Träger 48 und 50 können die Winkel bestimmt werden, in denen das Kommandopult 32 in den beiden Bedienpositionen zu der betreffenden Wand des Gehäuses 12 angeordnet sind. Selbstverständlich kann auf die Träger 48 und 50 auch verzichtet werden. Das Kommandopult ist dann in der ersten Bedienposition parallel zur Vorderwand 14 und in der zweiten Bedienposition senkrecht zur rechten Seitenwand 20 angeordnet.

In Fig. 4 ist in einem horizontalen Schnitt ein weiteres Ausführungsbeispiel gezeigt, in dem ein Kommandopult 32a nicht an einer Seitenkante, sondern abgelegen von einer solchen Seitenkante an einer der vier Wände des Gehäuses angelenkt ist. Das Kommandopult 32a ist dabei nicht über einen oder mehrere Träger, sondern unmittelbar mit einem oder mehreren Schwenkgelenken verbunden, von denen in Fig. 4 nur das am weitesten oben liegende Schwenkgelenk erkennbar und mit 44a bezeichnet ist. Bei dem Kommandopult 32a verläuft somit die durch das Schwenkgelenk 44a festgelegte Schwenkachse annähernd durch eine Kante 56 an der Rückseite 40a des Kommandopultes 32a. Diese Konstruktion ermöglicht es, das Kommandopult 32a zwischen einer ersten und einer zweiten Bedienposition hin- und herzuklappen.

In der ersten Bedienposition, die in Fig. 4 mit durchgezogenen Linien gezeigt ist, kann eine Bedienperson 52a auf Bedienelemente 36a an der Vorderseite des Kommandopultes 32a zugreifen und gleichzeitig durch ein erstes Fenster 58 in einen Arbeitsraum 11a einsehen. In einer zweiten Bedienposition, die in Fig. 4 mit gestrichelten Linien dargestellt ist, kann eine Bedienperson 52a' ebenfalls auf die Bedienelemente 36a zugreifen und dabei gleichzeitig durch ein zweites Fenster 60 in den Arbeitsraum 11a einsehen. Um das Kommandopult 32a von der ersten Bedienposition in die zweite Bedienposition zu überführen, muß die Bedienperson 52 lediglich das Kommandopult 32 ergreifen und in Richtung des Pfeiles 62 nach hinten führen, so daß es schließlich in eine zu der Seitenwand 55 parallele Lage gelangt. Bei der Seitenwand 55 kann es sich im übrigen um eine beliebige Wand des Gehäuses einer Werkzeugmaschine handeln.

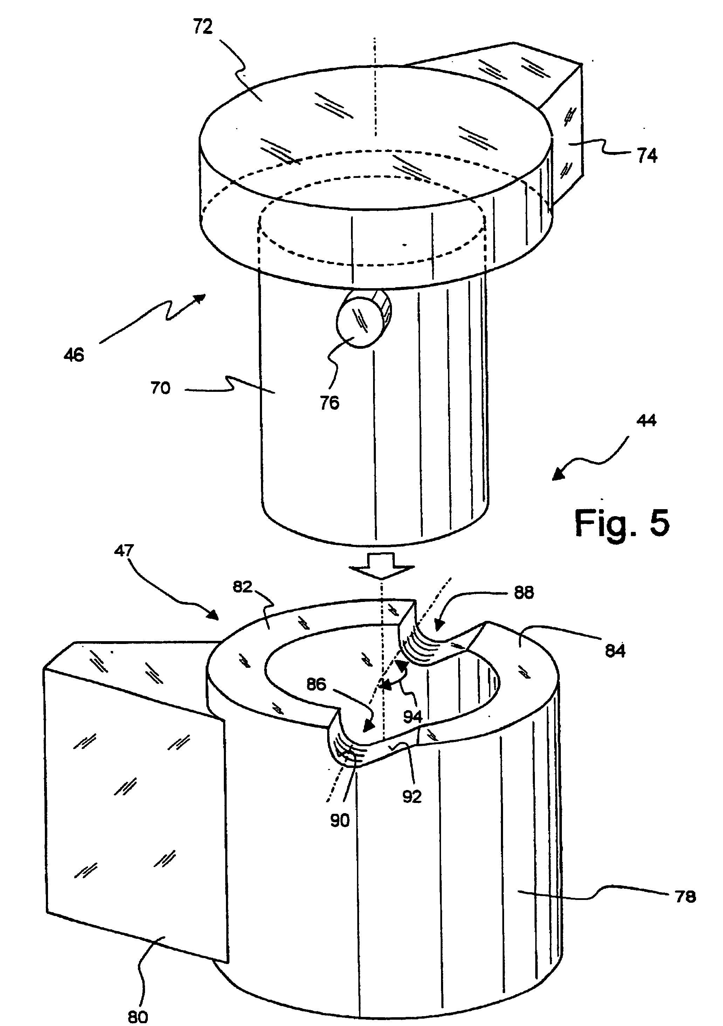

Fig. 5 zeigt das obere Schwenkgelenk 44 in einer perspektivischen Darstellung vor der Montage. Der obere Gelenkkörper 46 weist einen massiven zylindrischen Drehkörper 70 auf, der von unten an ein ebenfalls massives Abschlußteil 72 angesetzt ist. An das Abschlußteil 72 ist ein Aufnahmeteil 74 angeschweißt, an dem in nicht näher dargestellter Weise bspw. der obere Träger 48 befestigt werden kann. In den Drehkörper 70 ist knapp unterhalb des Abschlußteiles 72 ein Bolzen 76 in eine hierfür vorgesehene Sacklochbohrung dreh- und verliersicher so eingesetzt, daß er radial nach außen über den Drehkörper vorsteht.

Der untere Gelenkkörper 47 weist eine Hülse 78 auf, an der seitlich ein zweites Aufnahmeteil 80 angeschweißt ist. Das zweite Aufnahmeteil 80 ist im montierten Zustand in nicht näher dargestellter Weise an einer Seitenwand des Gehäuses befestigt. Auf ihrer nach oben weisenden ringförmigen Stirnfläche 82 ist an der Hülse 78 eine Gleitfläche 84 ausgebildet, die zu beiden Seiten von einer ersten und einer zweiten Ausnehmung 86 bzw. 88 begrenzt wird. Die erste Ausnehmung 86 weist einen konkaven Abschnitt 90 auf, dessen Form der Außenkontur des Bolzens 76 entspricht. Dieser konkave Abschnitt 90 geht über eine Flanke 92, die als geneigte ebene Gleitfläche ausgebildet ist, in einen ebenen Abschnitt der Gleitfläche 84 über. Die zweite Ausnehmung 88 ist genauso wie die erste Ausnehmung 86, aber gegenläufig zu dieser ausgebildet. Bei der Montage wird der Drehkörper 70 des oberen Gelenkkörpers 46 in die Hülse 78 des unteren Gelenkkörpers 47 eingesetzt, so daß der oberer Gelenkkörper 46 drehbar und in axialer Richtung beweglich, aber ansonsten fixiert in dem unteren Gelenkkörper 47 gehalten ist.

Durch die erste Ausnehmung 86 und die zweite Ausnehmung 88 werden zwei besondere Relativpositionen des oberen Gelenkkörpers 46 zu dem unteren Gelenkkörper 47 festgelegt, die zwei selbstarretierenden Bedienpositionen des Kommandopultes 32 entsprechen. Bei diesen Relativpositionen tritt eine Selbstarretierung des oberen Gelenks 44 ein, so daß ein Verdrehen der beiden Gelenkkörper 46 und 47 aus diesen besonderen Relativpositionen heraus - und damit ein Verschwenken des Kommandopultes aus einer der beiden Bedienpositionen - nur mit zusätzlichem Kraftaufwand möglich ist. Durch die erste und zweite Ausnehmung 86 bzw. 88 wird dabei ein maximaler Schwenkwinkel 94 festgelegt, den das obere Gelenkteil 46 relativ zum unteren Gelenkteil 47 überstreichen kann.

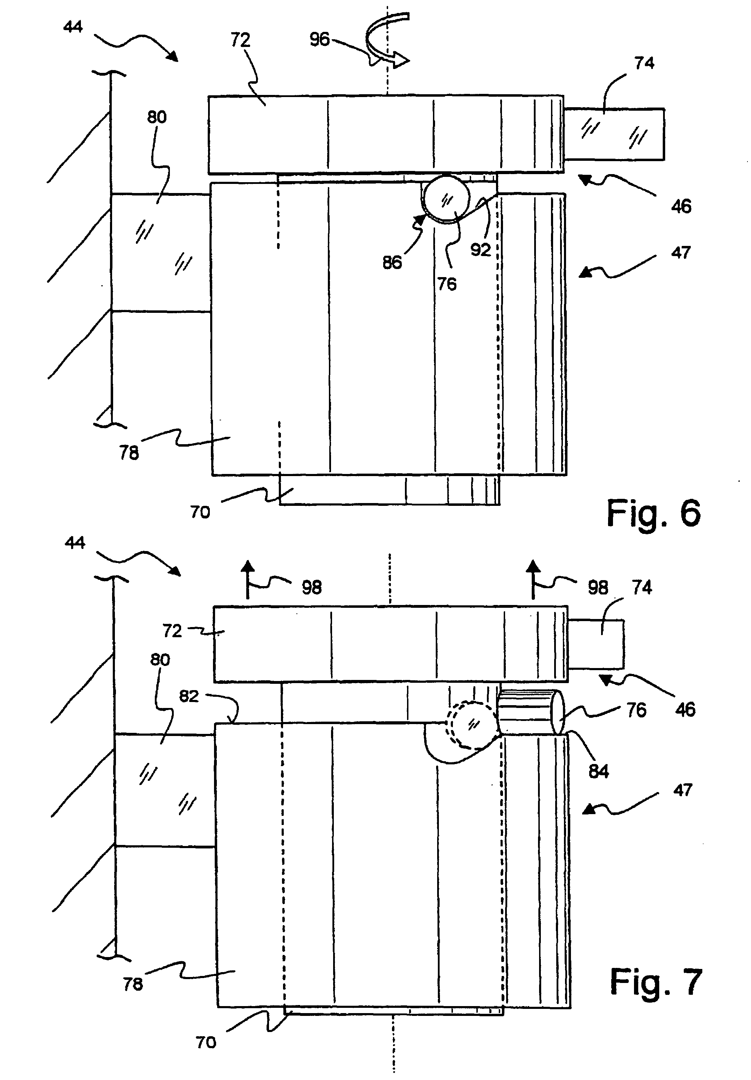

Die Selbstarretierung wird im folgenden anhand der Figuren 6, 7 und 8 näher erläutert. Fig. 6 zeigt in einer Seitenansicht das Schwenkgelenk 44 im montierten und arretierten Zustand. Der Bolzen 76 ist in diesem Zustand, der einer der beiden äußeren Bedienpositionen entspricht, in der ersten Ausnehmung 86 aufgenommen. Ein weiteres Verdrehen des oberen Gelenkkörpers 46 entgegen der durch den Pfeil 96 angedeuteten Richtung ist in diesem Zustand nicht möglich, da der starr mit dem oberen Gelenkkörper 46 verbundene Bolzen 76 in dieser Richtung in der ersten Ausnehmung 86 festgehalten ist. Um die Arretierung zu lösen, kann der obere Gelenkkörper 46 jedoch in der durch den Pfeil 96 angedeuteten Richtung verdreht werden. Der am oberen Gelenkkörper angeordnete Bolzen 76 gleitet dann die Flanke 92 entlang, wodurch der Bolzen 76 den oberen Gelenkkörper 46 nach oben anhebt, wie dies durch die Pfeile 98 in Fig. 7 angedeutet ist.

Wird der obere Gelenkkörper 46 weiter in die gleiche Richtung gedreht, so gelangt der Bolzen 76 schließlich auf die Gleitfläche 84, die auf der Stirnfläche 82 der Hülse 78 ausgebildet ist. In diesem Zustand kann der obere Gelenkkörper 46 weiter gegenüber dem unteren Gelenkkörper 47 verdreht werden, wobei lediglich die Gleitreibung zwischen dem Bolzen 76 und der Gleitfläche 84 zu überwinden ist. Nach Durchmessen des maxima. len Schwenkwinkels 94 nimmt das Schwenkgelenk 44 die zweite selbstarretierte Bedienposition ein, indem der Bolzen 76 in die zweite Ausnehmung 88 herabgleitet. Dabei senkt sich der obere Gelenkkörper 46 wieder auf den unteren Gelenkkörper 47 ab.

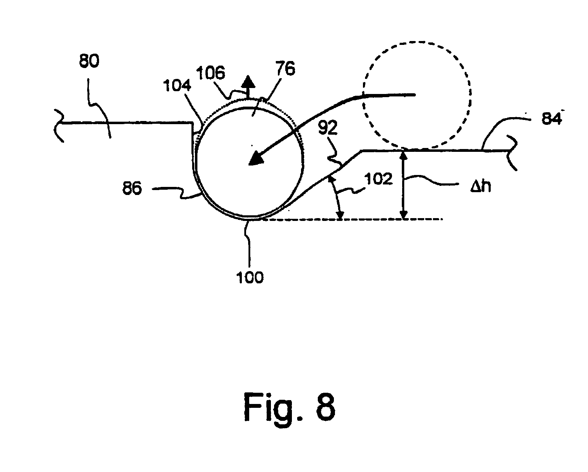

Die geometrischen Verhältnisse zwischen dem Bolzen 76 und der ersten oder zweiten Ausnehmung 86 bzw. 88 sind in Fig. 8 in einer vergrößerten Darstellung gezeigt. Eine Höhendifferenz Δh zwischen der Gleitfläche 84 und einem tiefsten Punkt 100 der Ausnehmung 86 bestimmt die potentielle Energie, die aufgrund der Gewichtskraft aller starr mit dem Bolzen 76 verbundenen Teile, also insbesondere der Träger 48 und 50 sowie des Kommandopultes, freigesetzt wird, wenn der Bolzen 76 von der gestrichelt dargestellten Gleitposition in den mit durchgezogener Linie dargestellten arretierten Zustand übergeht. Diese potentielle Energie ist umgekehrt erforderlich, um das Kommandopult 32 aus der arretierten Bedienposition zu lösen. Die Höhendifferenz Δh ist deswegen so zu wählen, daß bei einem gegebenen Gesamtgewicht des Kommandopults 32 und der daran befestigten Teile das Kommandopult 32 sicher in einer Bedienposition arretiert wird, andererseits aber die Arretierung auch wieder ohne zu großen Aufwand gelöst werden kann.

Die zum Lösen der Arretierung erforderliche Kraft wird dabei durch das Gesamtgewicht und durch einen Winkel 102 festgelegt, den die als schiefe Ebene ausführte Flanke 92 gegenüber der Horizontalen einnimmt. Je flacher dieser Winkel 102 gewählt wird, desto geringer ist die Kraft, die zum Lösen der' Arretierung aufgebracht werden muß.

Wenn der Bolzen 76 die Arretierungsposition in der Ausnehmung 86 einnimmt, muß die gesamte kinetische Energie des Kommandopults 32 sowie die der Höhendifferenz Δh entsprechende potentielle Energie schlagartig von der Hülse 78 aufgenommen werden. Um Verschleißerscheinungen an dem Bolzen 76 und der Ausnehmung 86 entgegenzuwirken, ist die Innenkontur der Ausnehmung 86 genau an die Außenkontur des Bolzens 76 angepaßt. Der Bolzen 76 liegt dann beim Herabgleiten in die Ausnehmung 86 nicht mehr nur entlang einer Linie, sondern entlang einer Fläche an der Hülse 78 an. Aufgrund der wesentlich vergrößerten Anlagefläche treten auf diese Weise erheblich geringere Druckkräfte auf, wodurch dem Verschleiß der beteiligten Teile entgegengewirkt wird.

Die Anpassung der korrespondierenden Flächen hat zudem den Vorteil, daß der Bolzen 76, nachdem er seine Arretierungsposition in der Ausnehmung 86 eingenommen hat, noch ein kurzes Stück auf einer der geneigten Flanke 92 gegenüberliegenden senkrechten Flanke 104 entlanggleiten kann. Dadurch bewegt sich der Bolzen 76 und damit auch der obere Gelenkkörper 46 mit dem daran befestigten Kommandopult 32 über eine sehr kurze Strecke in Richtung eines Pfeiles 106 nach oben, was durch eine zusätzliche punktierte Kontur des Bolzens 76 angedeutet ist. Auf diese Weise entsteht eine Art Dämpfungseffekt, da die Bewegung des Bolzens 76 nicht schlagartig abgebremst, sondern nach oben umgelenkt wird. Dieser Effekt führt zu einer zusätzlichen Schonung der aneinander anliegenden Teile.

## Patentansprüche

1. Werkzeugmaschine mit einem Arbeitsraum (11), einem den Arbeitsraum (11; 11a) umschließenden Gehäuse (12), einem Kommandopult (32; 32a), das der Steuerung der Werkzeugmaschine (10) dient, und mit einem von außen an einer Wand (14, 20; 55) des Gehäuses (12) befestigten Gelenk (44, 45; 44a), über das das Kommandopult (32; 32a) um eine vertikale Achse (51) verschwenkbar an der Wand (14, 20; 55) befestigt ist, **dadurch gekennzeichnet, daß** das Kommandopult (32; 32a) starr mit dem Gelenk (44, 45; 44a) verbunden und zwischen zwei Bedienpositionen verschwenkbar ist, von denen wenigstens eine selbstarretierend ist, und daß die wenigstens eine selbstarretierende Bedienposition durch das Gelenk (44, 45; 44a) festgelegt ist.

2. Werkzeugmaschine nach Anspruch 1, **dadurch gekennzeichnet, daß** das Gelenk (44, 45; 44a) auf der Höhe des Kommandopultes (32; 32a) angeordnet ist.

3. Werkzeugmaschine nach einem der Ansprüche 1 oder 2, **dadurch gekennzeichnet, daß** die vertikale Achse im wesentlichen mit einer Seitenkante (30) des Gehäuses (12) zusammenfällt.

4. Werkzeugmaschine nach einem der Ansprüche 1 bis 3, **dadurch gekennzeichnet, daß** die vertikale Achse im wesentlichen mit einer Seitenkante (56) einer von Bedienelementen (36a) freien Rückseite (40a) des Kommandopultes (32a) zusammenfällt.

5. Werkzeugmaschine nach einem der Ansprüche 1 bis 3, **dadurch gekennzeichnet, daß** das Kommandopult (32) über einen Träger (48, 50) mit dem Gelenk (44, 45) verbunden ist.

6. Werkzeugmaschine nach Anspruch 5, **dadurch gekennzeichnet, daß** der Träger (48, 50) an einer von Bedienelementen (36) freien Rückseite (40) des Kommandopultes (32) starr befestigt ist.

7. Werkzeugmaschine nach Anspruch 6, **dadurch gekennzeichnet, daß** in der wenigstens einen selbstarretierenden Bedienposition das Kommandopult (32; 32a) gegenüber Zwischenpositionen abgesenkt ist.

8. Werkzeugmaschine nach Anspruch 7, **dadurch gekennzeichnet, daß** das Gelenk (44) zwei übereinander angeordnete und um die Achse zueinander verdrehbare Gelenkkörper (46, 47) aufweist, wobei an einem Gelenkkörper (46) ein Führungskörper (76) ausgebildet ist und an dem anderen Gelenkkörper (47) eine Führungsfläche (84) festlegt ist, wobei die Führungsfläche (84) wenigstens eine Ausnehmung (86, 88) zur Aufnahme des Führungskörpers (76) aufweist, die die wenigstens eine selbstarretierende Bedienposition festgelegt.

9. Werkzeugmaschine nach Anspruch 8, **dadurch gekennzeichnet, daß** die wenigstens eine Ausnehmung (90) eine Flanke (92) aufweist, über die der Führungskörper (76) bei der Einnahme der wenigstens einen selbstarretierenden Bedienposition geführt wird.

10. werkzeugmaschine nach Anspruch 9, **dadurch gekennzeichnet, daß** die Flanke (92) als schiefe Ebene ausgebildet ist.

11. Werkzeugmaschine einem der Ansprüche 8 bis 10, **dadurch gekennzeichnet, daß** die wenigstens eine Ausnehmung (86, 88) in ihrer Form an den Führungskörper (76) angepaßt ist, so daß in der wenigstens einen selbstarretierenden Bedienposition der Führungskörper (76) flächig in der wenigstens einen Ausnehmung (86, 88) aufgenommen ist.

12. Werkzeugmaschine nach Anspruch 11, **dadurch gekennzeichnet, daß** der Führungskörper (76) als Bolzen ausgebildet ist und daß die wenigstens eine Ausnehmung (86, 88) einen an die Umfangskontur des Bolzens (76) angepaßten gekrümmten Abschnitt (90) aufweist, so daß der Bolzen (76) in der wenigstens einen Ausnehmung (86, 88) geringfügig schwingen kann.

13. Werkzeugmaschine nach einem der vorhergehenden Ansprüche, **dadurch gekennzeichnet, daß** das Kommandopult (32; 32a) mit der Werkzeugmaschine (10) über einen Kabelstrang (38) verbunden ist, der aus dem Kommandopult (32; 32a) an dessen oberen Ende austritt und in das Gehäuse (12) in einer Höhe unterhalb des Kommandopultes (32; 32a) eintritt.

## Claims

1. A machine tool having a working space (11), a housing (12) enclosing the working space (11; 11a), a control console (32; 32a) which serves to control the machine tool (10), and a joint (44, 45; 44a) which is fastened from outside to a wall (14, 20; 55) of the housing (12) and via which the control console (32, 32a) is fastened to the wall (14, 20; 55) in such a way that it can be swivelled about a vertical axis (51), **characterized in that** the control console (32; 32a) is rigidly connected to the joint (44, 45; 44a), and can be swivelled between two operating positions, of which at least one is self-locking, and that the at least one self-locking operating position is established by the joint (44, 45; 44a).

2. The machine tool according to claim 1, **characterized in that** the joint (44, 45; 44a) is arranged at the level of the control console (32; 32a).

3. The machine tool according to claim 1 or claim 2, **characterized in that** the vertical axis essentially coincides with a side edge (30) of the housing (12).

4. The machine tool according to anyone of claims 1 to 3, **characterized in that** the vertical axis essentially coincides with a side edge (56) of a rear side (40a), free of operating elements (36a), of the control console (32a).

5. The machine tool according to anyone of claims 1 to 3, **characterized in that** the control console (32) is connected to the joint (44, 45) via a bearer (48, 50).

6. The machine tool according to claim 5, **characterized in that** the bearer (48, 50) is rigidly fastened to a rear side (40), free of operating elements (36), of the control console (32).

7. The machine tool according to claim 6, **characterized in that**, in the at least one self-locking operating position, the control console (32; 32a) is lowered relative to intermediate positions.

8. The machine tool according to claim 7, **characterized in that** the joint (44) has two joint bodies (46, 47) which are arranged one above the other and are rotatable relative to one another about the axis, a guide body (76) being formed on one joint body (46) and a guide surface (84) being established on the other joint body (47), the guide surface (84) having at least one recess (86, 88) for locating the guide body (76), this recess (86, 88) establishing the at least one self-locking operating position.

9. The machine tool according to claim 8, **characterized in that** the at least one recess (86, 88) has a flank (92), via which the guide body (76) is guided when assuming the at least one self-locking operating position.

10. The machine tool according to claim 9, **characterized in that** the flank (92) is designed as an inclined plane.

11. The machine tool according to anyone of claims 8 to 10, **characterized in that** the at least one recess (86, 88) is adapted in its shape to the guide body (76), so that, in the at least one self-locking operating position, the guide body (76) is located with surface contact in the at least one recess (86, 88).

12. The machine tool according to claim 11, **characterized in that** the guide body (76) is designed as a pin, and **in that** the at least one recess (86, 88) has a curved section (90) adapted to the circumferential contour of the pin (76), so that the pin (76) can oscillate slightly in the at least one recess (86, 88).

13. The machine tool according to anyone of the preceding claims, **characterized in that** the control console (32; 32a) is connected to the machine tool (10) via a cable string (38) which comes out of the control console (32; 32a) at it's top end and enters the housing (12) at a level below the control console (32; 32a).

## Revendications

1. Machine-outil comprenant une cellule de travail (11), un carter (12) délimitant la cellule de travail (11 ; 11a), un pupitre de commande (32 ; 32a), qui est utilisé pour la commande de la machine-outil (10), et comprenant un système articulé (44, 45 ; 44a), qui est fixé de l'extérieur contre une paroi (14, 20 ; 55) du carter (12) et par l'intermédiaire duquel le pupitre de commande (32 ; 32a) est assemblé avec la paroi (14, 20 ; 55) de manière pivotante autour d'un axe vertical (51), **caractérisée en ce que** le pupitre de commande (32 ; 32a) est assemblé de manière rigide avec le système articulé (44, 45 ; 44a) et peut pivoter entre deux positions de service, parmi lesquelles au moins une est une position à blocage automatique, et **en ce que** la au moins une position de service à blocage automatique est définie par le système articulé (44, 45 ; 44a).

2. Machine-outil selon la revendication 1, **caractérisée en ce que** le système articulé (44, 45 ; 44a) est disposé à la hauteur du pupitre de commande (32 ; 32a).

3. Machine-outil selon la revendication 1 ou 2, **caractérisée en ce que** l'axe vertical coïncide sensiblement avec une arête latérale (30) du carter (12).

4. Machine-outil selon l'une quelconque des revendications 1 à 3, **caractérisée en ce que** l'axe vertical coïncide sensiblement avec une arête latérale (56) d'une face arrière (40a) du pupitre de commande (32a) non munie d'éléments de commande (36a).

5. Machine-outil selon l'une quelconque des revendications 1 à 3, **caractérisée en ce que** le pupitre de commande (32) est assemblé au moyen d'un support (48, 50) avec le système articulé (44, 45).

6. Machine-outil selon la revendication 5, **caractérisée en ce que** le support (48, 50) est fixé de manière rigide contre une face arrière (40) du pupitre de commande (32) non munie d'éléments de commande (36).

7. Machine-outil selon la revendication 6, **caractérisée en ce que**, dans la position de service à blocage automatique, le pupitre de commande (32 ; 32a) est abaissé par rapport à des positions intermédiaires.

8. Machine-outil selon la revendication 7, **caractérisée en ce que** le système articulé (44) comporte deux corps d'articulation (46, 47) aptes à être entraînés en rotation l'un par rapport à l'autre autour de l'axe, un corps de guidage (76) étant réalisé au niveau de l'un des corps d'articulation (46) et une surface de guidage (84) étant définie sur l'autre corps d'articulation (47), la surface de guidage (84) étant munie d'au moins un évidement (86, 88), qui est destiné à recevoir le corps de guidage (76) et qui définit la au moins une position de service à blocage automatique.

9. Machine-outil selon la revendication 8, **caractérisée en ce que** le au moins un évidement (90) comporte un flanc (92), sur lequel est guidé le corps de guidage (76) lorsqu'il est amené dans la au moins une position de service à blocage automatique.

10. Machine-outil selon la revendication 9, **caractérisée en ce que** le flanc (92) est conçu sous forme de plan incliné.

11. Machine-outil selon l'une quelconque des revendications 8 à 10, **caractérisée en ce que** le au moins un évidement (86, 88) a une forme adaptée au corps de guidage (76), de telle sorte que le corps de guidage (76), dans la au moins une position de service à blocage automatique, est logé dans le au moins un évidement (86, 88) en contact avec celui-ci.

12. Machine-outil selon la revendication 11, **caractérisée en ce que** le corps de guidage (76) est conçu sous forme de tourillon et **en ce que** le au moins un évidement (86, 88) comporte une partie courbe (90) adaptée au contour périphérique du tourillon (76), de telle sorte que le tourillon (76) peut pivoter légèrement dans le au moins un évidement (86,88).

13. Machine-outil selon l'une quelconque des revendications précédentes, **caractérisée en ce que** le pupitre de commande (32 ; 32a) est assemblé avec la machine-outil (10) par l'intermédiaire d'un faisceau de câbles (38) qui sort au niveau de l'extrémité supérieure du pupitre de commande (32 ; 32a) et pénètre dans le carter (12) à une hauteur en dessous du pupitre de commande (32 ; 32a).
